# EUROPEAN PATENT APPLICATION

(11) **EP 3 345 478 A1**
(43) Date of publication of application: **11.07.2018**
(21) Application number: 16840877.1
(22) Date of filing: 01.09.2016
(51) Int. Cl.: A01N 1/00, G09B 23/28

(54) **CLINICAL CADAVER SIMULATOR**

(30) Priority: 02.09.2015 ES 201531263
(71) Applicant: Universidad Miguel Hernandez De Elche, 03202 Elche (Alicante) (ES); Universidad De Murcia, 30003 Murcia (ES)
(72) Inventor: SANCHEZ DEL CAMPO, Francisco, 03202 Elche (ES); SANCHEZ FERRER, Marina, 03202 Elche (Alicant) (ES); SANCHEZ FERRER, Francisco, 03202 Elche (Alicante) (ES); SANCHEZ FERRER, Maria Luisa, 30003 Murcia (ES)
(74) Representative: ABG Patentes, S.L.
(86) International application number: PCT/ES2016/070616
(87) International publication number: WO 2017/037323

(57) **Abstract**

The invention relates to a composition comprising a humectant, a first antiseptic, a fixative, a thickener, a dye, and water. The invention also relates to a cadaver comprising a composition of the invention and/or at least one tag configured for communicating by radio frequency and transmitting clinical information contained in the tag to a device, as well as to production methods and to uses thereof for medical training, learning, or assessment. The invention further relates to simulators and to uses thereof for medical training, learning, or assessment.

## Description

### Field of the Invention

The present invention is comprised in the field of clinical simulators for medical training, learning, and assessment.

### Background of the Invention

Simulators are needed in medical school and today there are increasingly more models, some of which are high-tech models for students to learn certain techniques.

Most simulators are intended for specific functions, for example, there are simulators for cardiac massage or endotracheal intubation, spinal tap, or venoclysis. Therefore, there is a need to have several simulators available, which are usually expensive and sometimes may not successfully simulate the real life state of a patient and are considered a dummy.

The use of animals as an alternative presents a number of various problems, including significant anatomical differences. Furthermore, the animal must be treated so as to inflict minimal suffering, so it has to be anesthetized by an anesthesiologist with the subsequent spending of resources and a limitation of the intervention to a given duration. The use of animals furthermore entails a high cost because the animals must be housed under extreme hygiene conditions.

On the other hand, the use of frozen human cadavers which are thawed before use have the drawback of being hazardous for users because they are not treated with antiseptics, and at the same time their use is closely linked to the duration of any practice since the period of decomposition begins once they are thawed, which gives off unpleasant smells and makes it impossible to freeze them again, as thawing out a second time leads to tissues having a consistency that is not suitable for performing surgery.

Alternatively, cadavers preserved with conventional formol or phenol techniques cannot be used to perform some surgeries, such as laparoscopy, because the rigidity of their tissues, and of the abdominal wall in particular, prevents the abdominal wall from distending due to the action of pneumoperitoneum distension, which is essential for creating a cavity sufficient for being able to work with the suitable instruments.

Cadavers prepared with the Thiel method (Thiel, W. Annals of Anatomy (1992) 174:185-195; (2002) 184:267-269), suffer the drawback that the cadaver cannot bleed, so blood pressure cannot be monitored and hemostasis cannot be performed.

It is therefore necessary to develop new low-cost clinical simulators that can be used to simulate different pathologies, have a long service life, are capable of simulating a real live human and allow practicing a number of techniques simultaneously.

### Summary of the Invention

In a first aspect, the invention relates to a composition comprising a humectant, a first antiseptic, a fixative, a thickener, a dye, and water.

In a second aspect, the invention relates to a cadaver comprising a composition of the invention in its vascular system.

In a third aspect, the invention relates to method for preserving a cadaver which comprises injecting a composition of the invention into a cadaver.

In a fourth aspect, the invention relates to the use of a cadaver comprising a composition according to the invention in its vascular system for medical training, learning, or assessment.

In a fifth aspect, the invention relates to a cadaver comprising at least one tag configured for communicating by radio frequency and transmitting clinical information contained in the tag to a device.

In a sixth aspect, the invention relates to a method for obtaining a cadaver according to the invention which comprises implanting in the cadaver at least one tag configured for communicating by radio frequency and transmitting clinical information contained in said tag to a device.

In a seventh aspect, the invention relates to the use of a cadaver comprising at least one tag configured for communicating by radio frequency and transmitting clinical information contained in the tag to a device for medical training, learning, or assessment.

In an eighth aspect, the invention relates to a cadaver comprising a composition of the invention in its vascular system and additionally comprising at least one tag configured for communicating by radio frequency and transmitting clinical information contained in said tag to a device.

In a ninth aspect, the invention relates to the use of a cadaver comprising a composition of the invention in its vascular system and additionally comprising at least one tag configured for communicating by radio frequency and transmitting clinical information contained in said tag to a device for medical training, learning, or assessment.

In a tenth aspect, the invention relates to a method for obtaining a clinical simulator which comprises
(i) perfusing a cadaver with a composition according to the invention, and
(ii) implanting at least one tag configured for communicating by radio frequency and transmitting clinical information contained in the tag to a device.

In an eleventh aspect, the invention relates to a simulator comprising:
(I) a cadaver according to the invention and
(II) a reader configured for communicating by radio frequency with the tag and visually showing the clinical information of the tag or a reader configured for communicating by radio frequency with the tag and transmitting the information so as to be shown visually in another device.

In a twelfth aspect, the invention relates to a simulator comprising a cadaver comprising a composition of the invention and a peristaltic pump.

In a thirteenth aspect, the invention relates to the use of a simulator of the invention for medical training, learning, or assessment.

### Brief Description of the Drawings

Figure 1. A. Catheterization of the carotid artery and jugular vein. B. Recirculation of the fake blood by means of a peristaltic pump placed between the carotid artery and jugular vein.
Figure 2. A and B. Images of a laparoscopic view of a bleeding blood vessel of a cadaver reperfused with the fake blood.
Figure 3. A: NFC tag. B. Introduction of the NFC tag into the subcutaneous cell tissue.

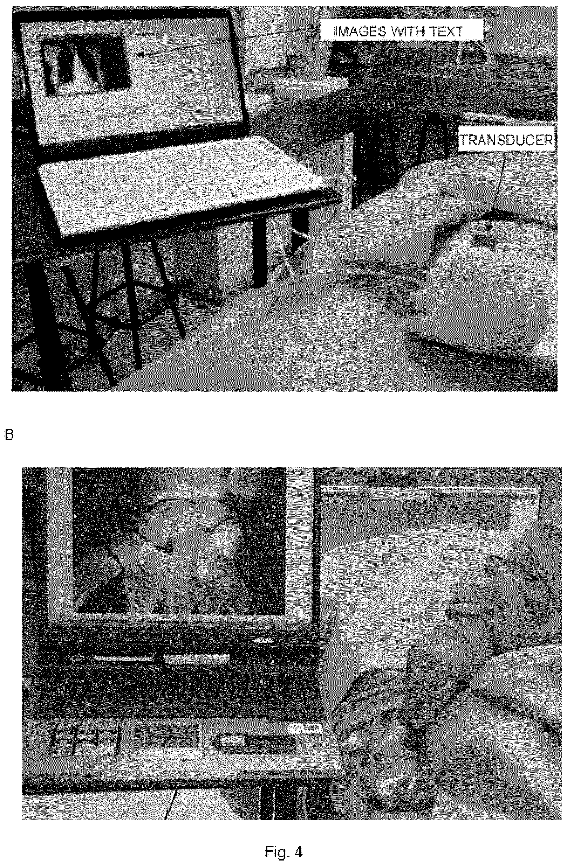

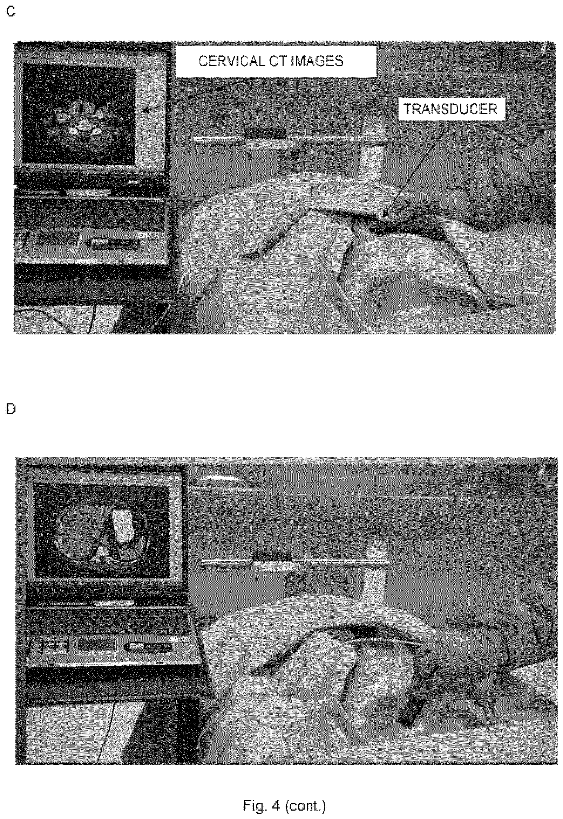

Figure 4. Depiction of how the simulator works, where the transducer reads the information contained in the NFC tag placed in different parts of the cadaver and the corresponding image is displayed in the computer. A. The transducer is placed in the chest region and cardiorespiratory auscultation sounds are heard, or a chest x-ray with descriptive text is displayed in the computer. B. The transducer placed in the wrist of the cadaver allows reproducing an x-ray of the carpus. C. The transducer located in the neck reproduces a cervical spine CT scan. D. The transducer located in the abdomen of the cadaver reproduces an abdominal CT scan in the computer.

### Detailed Description of the Invention

The inventors of the present invention have developed a composition with a behavior similar to that of blood, fake blood, (Examples 1, 2 and 4) and have developed a simulator optimal for practicing medicine prior to working on live patients.

Achieving blood recirculation by means of fake blood confers a high degree of realism to laparoscopy and thoracoscopy techniques where the surgeon must perform preventive hemostasis, or in cases of a vascular lesion, perform clamping, suction and ligation or hemostasis with an electric scalpel or other methods.

Furthermore, implanting NFC tags in the cadaver allows conducting practical assessments by obtaining clinical information, such as images of or sounds contained in said tag (Examples 3 and 4).

### Composition of the invention

In a first aspect, the invention relates to a composition comprising a humectant, a first antiseptic, a fixative, a thickener, a dye, and water.

As it is used herein, "humectant" refers to a surfactant substance which, when added to water, reduces its surface tension and promotes humectation, which results in water more readily penetrating another material or more readily spreading over its surface. There is a wide range of humectant agents known by the person skilled in the art. The humectant agents are preferably selected from hydrophilic polymeric substances, such as anionic or non-ionic surfactants, such as for example, monoethyleneglycol, polyethyleneglycol and polyethyleneglycol derivatives (for example, polyethyleneglycol alkylethers and oxyethylene polymers), polyols, ethoxylated fatty acids, and siloxanes. Other humectants are glycerin, propyleneglycol, sorbitol, lactic acid, and urea.

In a particular embodiment, the humectant is monoethyleneglycol or polyethyleneglycol.

As it is used herein, "monoethyleneglycol" refers to the compound with CAS number 107-21-1.

"Polyethyleneglycol" according to the invention, known as poly(oxy-1,2-ethinediyl), alpha-hydro-omega-hydroxy, PEG, Carbowax, poly(ethylene oxide), polyoxyethylene, polyethylene oxide, or Macrogol, corresponds to the compound with CAS number 25322-68-3.

As it is used herein, "antiseptic" refers to an antimicrobial substance which is applied to a biological tissue, reducing the possibility of infection, sepsis or putrefaction. Non-limiting illustrative examples of antiseptics are 4-chloro-3 methylphenol, acetic acid, boric acid, ethyl alcohol, isopropyl alcohol, and formaldehyde.

In a preferred embodiment, the antiseptic is 4-chloro-3 methylphenol.

"4-Chloro-3 methylphenol", also known as chlorocresol, parachlorometacresol, or PCMC, corresponds to the compound with CAS number 59-50-7.

As it is used herein, "fixative" refers to a substance capable of preserving the morphology and chemical composition of the cells of an organism, such that postmortem processes are stopped, and the structures are preserved with few artifacts, preparing them for later treatment. Non-limiting illustrative examples of chemical fixatives are formalin, formaldehyde, glyozal, acrolein, glutaraldehyde, methanol, ethanol, paraldehyde, osmium tetroxide, chromic oxide, acetic acid, picric acid, mercury blichloride, potassium dichromate, and acetone. In a particular embodiment, the fixative agent is formalin.

As it is used herein, "formalin" refers to 45% formol in water. As it is used herein, "thickener" refers to a compound which, when added to a mixture, increases its viscosity without substantially modifying other properties. Examples of thickeners are based on polysaccharides, such as vegetable gums or starches, proteins (egg yolk or collagen). Other thickeners are Agar-Agar, alginine, carrageenan, collagen, corn starch, gelatin, guar gum, locust bean gum, pectin, and xanthan gum. In a preferred embodiment, the thickener is potato starch or corn starch. In an even more preferred embodiment, the thickener is corn starch.

As it is used herein, "corn starch" or maize starch refers to the starch flour that does not contain the starch of the endosperm of the corn kernel.

As it is used herein, "dye" refers to a substance which is capable of modifying or intensifying color, where the dye can be natural or artificial. In a preferred embodiment, the dye is a red dye. Non-limiting illustrative examples of red dyes are E-120 or carmic acid, E-121 or orchil, E-122 azorubine, E-123 amaranth or carmine red, E-124 scarlet GN, E-126 Ponceau 6R, E-127 erythrosine, E128 Red 2G.

In a more preferred embodiment, the red dye is E-123.

As it is used herein, "E-123 dye" refers to the compound with CAS number 915-67-3.

In a preferred embodiment of the composition of the invention, the humectant is polypropyleneglycol or monopropyleneglycol, the antiseptic is 4-chloro-3-methylphenol, the fixative is formalin, the thickener is corn starch, and/or the dye is E-123 carmine red dye.

The composition of the invention may additionally contain a second antiseptic, a buffer agent, a compound capable of maintaining the color of tissues, a hygroscopic oxidizing agent, and/or a preservative agent.

In the context of the present invention, "buffer agent" is understood as an agent capable of controlling the pH of the solution. Buffer agents suitable for the present invention are (monoacid and diacid) phosphate, bicarbonate, sulfate, histidine, histidine-HCl, HEPES, and citrate.

The term "pH" refers to the acidity or alkalinity measurement of a solution. pH is typically in the range of 0 to 14 in an aqueous solution, where those solutions with a pH less than 7 being acidic and those having a pH greater than 7 being alkaline. pH=7 indicates a neutral solution, where the solvent is water. The pH of a solution can be determined in a precise manner by means of a potentiometer (or pH-meter), and it can also be determined in an approximate manner by means of indicators, using methods that are well known in the state of the art. Since the pH value may vary with the temperature, in the context of this invention the pH is measured at 20°C. The compositions of the invention have a mean pH at 20°C comprised between 6.5 and 8.5; preferably comprised between 7.0 and 7.5.

In the composition of the invention, one and the same compound may have more than one function. In a preferred embodiment, the second antiseptic and buffer agent is boric acid.

As it is used herein, trioxoboric or "boric acid" refers to the compound with CAS number 10043-35-3 which is slightly acidic and has antiseptic and buffer agent properties for regulating pH.

As it is used herein, "compound capable of maintaining the color of tissues" refers to a substance which, when added to a biological tissue, allows retaining the original color, specifically, maintaining the color of the live tissues. The person skilled in the art knows techniques for identifying compounds capable of maintaining the color of tissues, for example those compounds inhibiting enzymatic browning or inhibiting some steps of the Maillard reaction. Non-limiting illustrative examples of compounds capable of maintaining the color of tissues are sulfur anhydride or E 220, sodium sulfite or E 221, sodium acid sulfite, sodium bisulfite or E 222, sodium metabisulfite or E 223, potassium metabisulfite or E 224, calcium sulfite or E 226, calcium acid sulfite or E 227, and potassium acid sulfite or E 228.

As it is used herein, "sodium sulfite" refers to the compound with CAS number 7757-83-7.

As it is used herein, "hygroscopic oxidizing agent" refers to a chemical compound which oxidizes another substance in an electrochemical reaction or a reduction-oxidation reaction and which can absorb water. In a preferred embodiment, the hygroscopic oxidizing agent is ammonium nitrate.

As it is used herein, "ammonium nitrate" refers to the salt formed by nitrate and ammonium ions, with CAS number 6484-52-2.

As it is used herein, "preservative agent" refers to a compound which stops or inhibits the deterioration caused by the presence of different microorganisms in biological tissues. Non-limiting illustrative examples of preservatives are sorbates, benzoates, sulfites, nitrites, and nitrates. In a preferred embodiment, the preservative agent is potassium nitrate.

As it is used herein, "potassium nitrate" refers to the compound with CAS number 7757-79-1.

In a preferred embodiment of the composition, the second antiseptic and buffer agent is boric acid, the compound capable of maintaining the color of tissues is sodium sulfite, the hygroscopic oxidizing agent is ammonium nitrate, and/or the preservative agent is potassium nitrate.

In a more preferred embodiment, the composition of the invention comprises boric acid, monoethyleneglycol or polyethyleneglycol, ammonium nitrate, potassium nitrate, 4 chloro-3 methylphenol, sodium sulfite, formalin, corn starch, E-123 dye, and water.

In a preferred embodiment, the composition of the invention has a pH comprised between 6.5 and 8.5 measured at 20°C.

In the context of the present invention, the term "osmolality" is a measurement of the total concentration of substances in solution, defined as the number of osmoles of solute per liter of solution, which indicates the possible variation of osmotic pressure which will be produced in the cells when the composition of the invention is introduced in the cadaver. The osmolarity can be calculated from the osmolality value, which is measured by means of an osmometer using methods known by the person skilled in the art. Since osmolarity is temperature-dependent, in the context of the present invention the osmolarity is calculated at 20°C. The osmolarity of the composition of the invention, measured at 20°C, may be comprised between 300 and 410 mOsm/L; preferably between 310 and 390 mOsm/L; more preferably between 320 and 360 mOsm/L.

Ideally, the requirements that the composition of the invention must comply with are:
1. It must have a bright red color similar to arterial blood.
2. It must have a rheological behavior similar to natural blood, which means it presents the characteristics of a non-Newtonian fluid.
3. Its pigment and composition must not in any way alter the optics of endoscopes, laparoscopes, cystoscopes, hysteroscopes or arthroscopes. Therefore, it must not permanently stain or alter the apparatus, or indelibly impregnate the tissues, but rather it must disappear when it is suctioned out with the surgical suction device or pre-washing with physiological saline.
4. Its density and dynamic viscosity must allow vascular circulation.
5. Its characteristics must allow hemostasis performed not only by mechanical means, ligation by means of ligation suture and clip, but rather by means of a single- or double-pole electric scalpel, as well as by the more modern methods of radio frequency and ultrasounds.
6. It must be chemically stable to enable being used for an indefinite time.
7. It must include antiseptic substances for the purpose of preventing cadaver decomposition, as well as protecting handlers.
8. It must include suitable mineral salts in the suitable proportion so as to achieve tissue turgor.
9. The cadaver tissue texture, elasticity, and friability must not be altered by the composition of the invention.

Therefore, the different components of the composition of the invention can be in variable amounts, although the composition of the invention preferably comprises 0.1-0.3% (w/v) boric acid; 25-32% (v/v) monoethyleneglycol; 1.5-4% (w/v) ammonium nitrate; 2-5% (w/v) potassium nitrate; 0.7 M 4-chloro-3 methylphenol in 0.075-0.090% (v/v) ethyleneglycol or polypropyleneglycol; 0.15-0.25% (w/v) sodium sulfite; 2-4% (v/v) formalin; 0.1-0.3% (w/v) corn starch and 0.2-0.4% (w/v) E-123 carmine red dye.

The expressed ranges cover any intermediate value and end values.

In another more particular embodiment, the composition of the invention comprises 0.2375-0.2625% (w/v) boric acid; 26.6-29.4% (v/v) monoethyleneglycol; 3.04-3.36% (w/v) ammonium nitrate; 3.952-4.368% (w/v) potassium nitrate; 0.7 M 4-chloro-3 methylphenol in 0.07885-0.08715% (v/v) ethyleneglycol or polypropyleneglycol; 0.178-0.197% (w/v) sodium sulfite; 2.25-2.75% (v/v) formalin; 0.19-0.21% (w/v) corn starch; and 0.27-0.33% (w/v) E-123 carmine red dye.

In another even more preferred embodiment, the composition of the invention comprises 0.25% (w/v) boric acid; 28% (v/v) monoethyleneglycol; 3.2% (w/v) ammonium nitrate; 4.16% (w/v) potassium nitrate; 0.7 M 4-chloro-3 methylphenol in 0.083% (v/v) ethyleneglycol or polypropyleneglycol; 0.1875% (w/v) sodium sulfite; 2.5% (v/v) formalin, 0.20% (w/v) corn starch; 0.30% (w/v) E-123 carmine red dye.

The (w/v), or weight/volume, and (v/v), or volume/volume, percentages refer to the weight of the component per volume of water and volume of the component per volume of water, respectively.

### First cadaver

In another aspect, the invention relates to a cadaver (first cadaver of the invention) comprising a composition of the invention in its vascular system.

As it is used herein, "cadaver" refers to an animal body that has lost its life and in which no vital signs, such as pulse or beats, are recorded. The animal may be of any species, preferably a mammal, and more preferably a human.

The loss of life can be verified by means of identifying various signs of death, such as the complete and permanent absence of consciousness; the permanent absence of spontaneous breathing; the lack of perception and response to external stimuli; the absence of cranial nerve reflexes and spinal reflexes; atony of all the muscles; the end of the physiological regulation of body temperature or irreversible cardiac arrest.

As it is used herein, "vascular system" refers to the group of vessels that carry blood and lymph.

The composition of the invention can be administered to the cadaver preferably by means of perfusion with a peristaltic pump. The composition of the invention is thereby introduced through the circulatory system, whereby reaching all cells as a result of the network of capillaries.

### Preservation method

In another aspect, the invention relates to a method for preserving a cadaver which comprises injecting a composition of the invention into a cadaver.

As it is used herein, "preservation" of a cadaver refers to stopping or slowing down enzymatic action in human or animal tissue compared to the untreated tissue, which prevents or slows down the autocatalytic decomposition of this tissue, and/or it refers to the tissues showing greater resistance to external attacks by microorganisms compared to untreated tissues, therefore preventing or delaying the rapid deterioration of tissues which occurs after death.

As it is used herein, "injecting" or perfusing refers to introducing a solution into a cadaver. In a preferred embodiment, the perfusion is performed by arterial route. In a more preferred embodiment, the perfusion performed by arterial route is performed by carotid or femoral route. Preferably, the perfusion is performed by carotid route and it is collected by femoral artery, or it is performed by carotid route and it is collected by jugular vein, where this can also be done in a closed circuit by means of a peristaltic pump

As the person skilled in the art will understand, the cadaver is bled out prior to perfusion with the composition of the invention, where it is possible to perform perfusion with warm citrate physiological saline administered through the femoral route and right atrium.. Then, after 24 hours, it is possible to perform perfusion with Thiel solution (Thiel, W. Annals of Anatomy (1992) 174:185-195; (2002) 184:267-269). In a preferred embodiment, perfusion with Thiel solution is performed through the systemic, endotracheal, rectal and superior sagittal sinus route.

In another embodiment, the cadaver has been subjected to an arteriovenous by-pass.

"Arteriovenous by-pass" refers to the connection between arteries and veins, allowing an arteriovenous fistula. The person skilled in the art knows techniques for performing said arteriovenous by-pass, for example it is possible by means of the placement of a 10 mm plastic tube between the femoral vein and artery.

### Uses of the first cadaver

In another aspect, the invention relates to the use of the first cadaver of the invention for medical training, learning, or assessment.

Therefore, the first cadaver of the invention allows replacing the real life state with a simulated scenario in which medical students and professionals can train so as to acquire communication, psychomotor, or team work skills.

"Assessment" is understood in the present invention as assessing the communication and psychomotor skills of a medical student or professional, for example in what is referred to as the objective structured clinical examination (OSCE).

### Second cadaver

In another aspect, the invention relates to a cadaver (second cadaver of the invention) comprising at least one tag configured for communicating by radio frequency and transmitting clinical information contained in the tag to a device.

As it is used herein, "a tag configured for communicating by radio frequency and transmitting clinical information contained in the tag to a device," also known as a receiver, card, or transponder, refers to a system for the remote storage and retrieval of data by an emitter that wirelessly retrieves the data stored in said receiver or tag. Said tag allows transmitting an object identification request from a reader by means of radio waves to said receiver or tag. The tags contain antennas so as to allow receiving and replying to said requests by radio frequency. Therefore, as one skilled in the art will understand, the tags of the invention for transmitting clinical information by radio frequency are configured for communicating by radio frequency.

As it is used herein, "radio frequency" refers to the lowest energy portion of the electromagnetic spectrum, located between 3 hertz (Hz) and 300 gigahertz (GHz). Radio frequency includes, in a non-limiting illustrative manner, an electromagnetic wave, a light signal or a sound signal.

As it is used herein, "clinical information" refers to sounds, plots or images of a normal or sick human being or animal, such as, by way of non-limiting illustrative example, an x-ray image or CT image, NMR image, or scintigraphy.

The working of said tags, as well as the manner of including the clinical information and displaying it in a device such as a computer are known in the state of the art, and can be done by means of the use of commercial kits, such as the NFC Solutions Development Kit (SDK) by Identitive NFC containing NFC readers in order to use, through desktop and USB readers, basic commands for communication between the tag and reader in different programming languages such as VC++, Delphi, C# or VB.Net, and software for reproducing the clinical information in a device.

As the person skilled in the art will understand, the tag configured for communicating by radio frequency and transmitting clinical information contained in the tag to a device must be placed in the cadaver such that it can communicate by radio frequency.

In a particular embodiment, the tag is located subcutaneously. For implanting said tags subcutaneously, the skin can be cut and a small space can be created in the subcutaneous tissue, the tag placed and the incision closed by means of adhesives.

As a person skilled in the art will understand, the second cadaver of the invention may contain a variable number of tags.

In a preferred embodiment, the tag configured for communicating by radio frequency is an RFID-type tag.

"RFID-type tags" can use different frequencies, but generally the most common frequencies are: low frequency (LF), high frequency (HF) and ultra high frequency (UHF). Since radio waves behave differently according to their frequency, the suitable band must be chosen according to the application in which it is thought that the system will be used. Therefore, system frequency segmentation according to each frequency band is as follows:
- Low frequency (LF) RFID systems: these systems work at frequencies emitted in a range between 120 KHz and 150 KHz.
- High frequency (HF) RFID systems: these systems work at frequencies close to 13.56 MHz.
- Ultra high frequency (UHF) RFID systems: these systems work at frequencies comprised in a range between 860 and 960 MHz.

In a particular embodiment, the RFID-type tag is a high-frequency tag, and more particularly an NFC tag. High-frequency tags are suitable for communication even when located in the deep cavities of a cadaver, since the range of the tags is about 20 cm.

As it is used herein, "NFC tag" (Near Field Communication tag) refers to a short-range, high-frequency wireless communication tag which allows exchanging data between devices and communicates by means of induction in a magnetic field with a frequency of 13.56 MHz, wherein two spiral antennas are placed in their respective near fields.

The various types of tags include:
- passive tags, which do not require an additional power supply, and
- active tags, which require an additional power supply.

In the case of passive systems, it is necessary to extract energy from the environment in which the reading system is located. In the case of active systems, the energy is obtained from an energy source which generates energy independently, such as a battery, or from the power grid.

In a preferred embodiment, the tag is a passive-type tag.

The terms and limitations described above can likewise be applied to this aspect.

### Second method

In another aspect, the invention relates to a method for obtaining a cadaver comprising at least one tag configured for communicating by radio frequency and transmitting clinical information contained in the tag to a device (second cadaver of the invention), which comprises implanting in the cadaver at least one tag configured for communicating by radio frequency and transmitting clinical information contained in said tag to a device.

In a preferred embodiment, the tag is implanted subcutaneously.

In another preferred embodiment, the tag is an RFID-type tag, more particularly a NFC-type tag. In another embodiment, the tag is a passive-type tag.

The terms and limitations described above can likewise be applied to this aspect.

### Second use

In another aspect, the invention relates to the use of a cadaver comprising at least one tag configured for communicating by radio frequency and transmitting clinical information contained in the tag to a device (second cadaver of the invention) for medical training, learning, or assessment.

The terms and limitations described above can likewise be applied to this aspect.

### Third cadaver

In another aspect, the invention relates to a cadaver comprising a composition of the invention in its vascular system and additionally comprising at least one tag configured for communicating by radio frequency and transmitting clinical information contained in said tag to a device (third cadaver of the invention).

In a preferred embodiment, the tag is located subcutaneously.

In another preferred embodiment, the tag is an RFID-type tag, more particularly a NFC-type tag. In another embodiment, the tag is a passive-type tag.

The terms and limitations described above can likewise be applied to this aspect.

### Third use

In another aspect, the invention relates to the use of a cadaver comprising a composition of the invention in its vascular system and additionally comprising at least one tag configured for communicating by radio frequency and transmitting clinical information contained in said tag to a device for medical training, learning, or assessment.

### Third method

In another aspect, the invention relates to a production method for obtaining a clinical simulator which comprises
(i) perfusing a cadaver with a composition of the invention, and
(ii) implanting at least one tag configured for communicating by radio frequency and transmitting clinical information contained in the tag to a device.

As it is used herein, "clinical simulator" or simulator refers to a model simulating the real working of a live animal from the clinical point of view, i.e., it can be used for identifying and assessing different pathological conditions. Additionally, it can simulate various functions of a live animal, such as blood circulation, where it can be used in surgical and medical practice.

In a preferred embodiment, the cadaver has been previously perfused with Thiel solution.

In another embodiment, perfusion of the composition is carried out by arterial route, more particularly by carotid artery route or femoral artery route.

In another embodiment, the cadaver has been subjected to an arteriovenous by-pass.

In another embodiment, the tag implanted in step (ii) is implanted subcutaneously. In another embodiment, the tag is a RFID-type tag, more particularly a NFC tag.

In another embodiment, the tag is a passive-type tag.

The terms and limitations described above can likewise be applied to this aspect.

### Simulator

In another aspect, the invention relates to a simulator comprising:
(I) a cadaver comprising at least one tag configured for communicating by radio frequency and transmitting clinical information contained in the tag to a device or a cadaver comprising a composition of the invention and additionally at least one tag configured for communicating by radio frequency and transmitting clinical information contained in said tag to a device, and
(II) a reader configured for communicating by radio frequency with the tag and visually showing the clinical information of the tag or a reader configured for communicating by radio frequency with the tag and transmitting the information so as to be shown visually in another device.

According to the invention, the reader is configured for communicating by radio frequency, which involves transmitting at least one radio frequency signal, wherein said signal is in the working range of the at least one tag used in the invention, receiving at least one radio frequency signal of the at least one tag, in which said radio frequency signal additionally comprises information saved in said at least one tag, processing the clinical information contained in said at least one tag, and showing the clinical information or transmitting said information so as to be shown in another device.

In other words, the reader can send a signal by radio frequency, receive another signal by radio frequency and send the information to the computer for processing it and showing the information. Alternatively, the reader performs all those integrated functions.

The reader detects tags at a short distance due to the use of a series of available radio frequency technologies depending on the type of tag. In one embodiment, the tag is an RFID-type tag. In another embodiment, the tag is an NFC-type tag. In another embodiment, the tag is passive-type tag.

In preferred embodiments, a NFC reader and passive NFC tags are used.

The tag reader emits an electromagnetic wave at a specific frequency. The energy of the tag obtains energy from the wave using magnetic induction. The tag uses the energy to power a small chip transmitting a new electromagnetic wave that encodes the unique identification number of the tag according to a predefined protocol. The tag reader then receives the encoded signal and forwards the information to the calculation engine.

In order to read the clinical information contained in the tag, a reader that detects the tag by means of radio frequency in the specific electromagnetic wave is required.

The clinical information contained in the tag is shown in the reader (for example, a mobile telephone) or in an additional device, such as a computer.

Additionally, it is possible to have an interface configured for interacting with a user and selecting the information to be displayed as indicated by the user.

In another embodiment, the simulator additionally comprises a peristaltic pump.

As it is used herein, "peristaltic pump" refers to a type of positive displacement hydraulic pump used for pumping a variety of fluids, preferably blood.

In another aspect, the invention relates to a simulator comprising a cadaver comprising a composition of the invention in its vascular system and a peristaltic pump.

The terms and limitations described above can likewise be applied to this aspect.

The invention is described below by means of the following examples, which must be considered as being merely illustrative and in no case limiting of the scope of the present invention.

### Materials and methods

### Example 1. Preparation of the fake blood

To prepare the composition of fake blood, the following components are added together in the mentioned amounts:

| | |
|---|---|
| Boric acid | 0.25 g |
| Monoethyleneglycol | 28.00 ml |
| Ammonium nitrate (0.2 g/ml) | 16.00 ml |
| Potassium nitrate | 4.16 g |
| 4chloro-3 methylphenol (0.7 Minethyleneglycol or polypropyleneglycol) | 0.83 ml |
| Sodium sulfite (0.0375 g/ml) | 5.00 ml |
| Formalin (45% formol) | 2.50 ml |
| Corn starch | 0.20 g |
| Carmine red dye E-123 | 0.30 g |
| Distilled water | (up to 100 ml) |

The components are dissolved at room temperature and finally filtered by means of filter paper.

### Example 2. Preparation of the cadaver by perfusing with the fake blood

The cadavers come from people who generously and voluntarily donated their bodies for medical teaching and research, and they were treated with the utmost respect by the users and were incinerated at the end.

24-hour cadavers are subjected to catheter implantation by means of arteriotomy and venotomies of the femoral or jugular veins, exanimation by means of perfusion of warm citrate physiological saline until clean liquid comes out through the catheter. It is then perfused with Thiel solution through the systemic, endotracheal, rectal and superior sagittal sinus route.

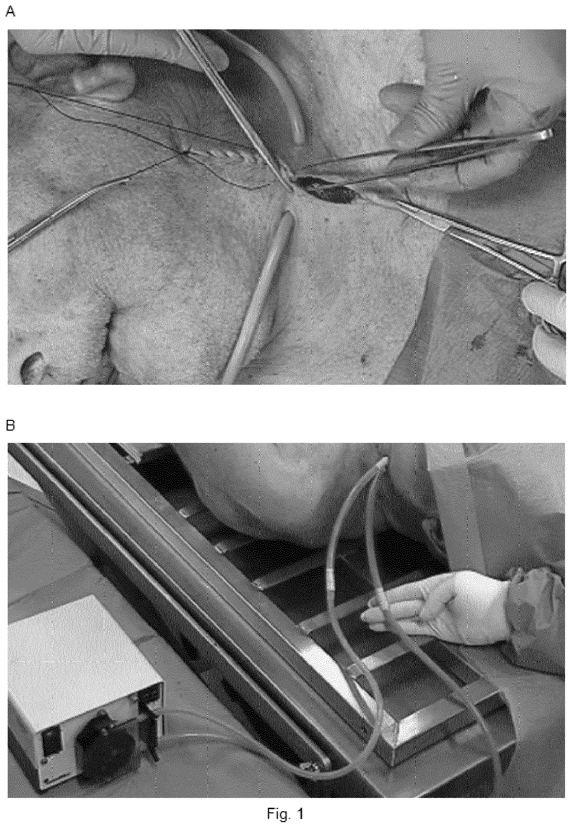

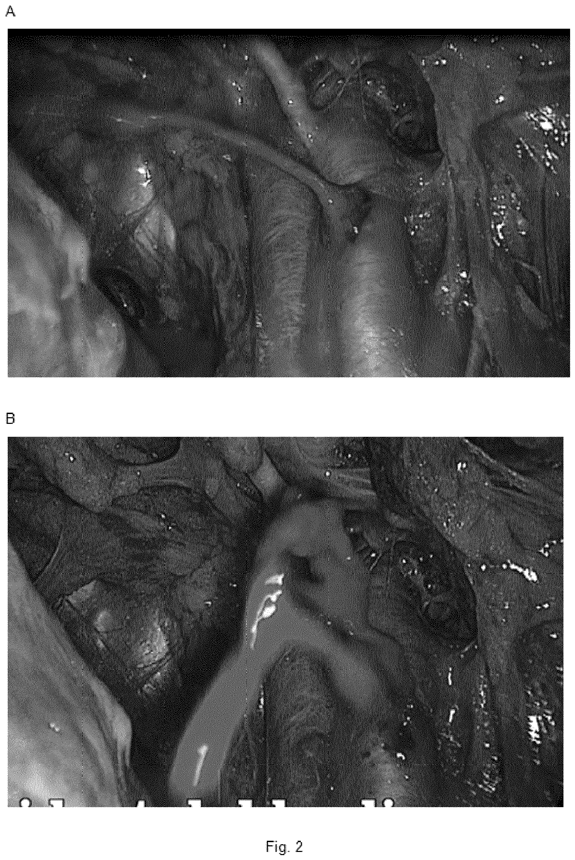

24 hours after perfusion with Thiel solution through the systemic route, a Kehr's T tube is placed in the carotid artery, another one is placed in the jugular vein suturing the soft parts of the dissection, while at the same time an arteriovenous fistula is performed by means of a by-pass with a 10 mm plastic tube between the femoral vein and artery (Figure 1A); under these conditions and by means of a peristaltic pump, the cadaver is perfused with the fake blood entering through the carotid artery and exiting through the jugular vein, restoring circulation (Figure 1B). The blood vessels bleed under these conditions (Figure 2A and 2B).

If the capillary circulation is not enough, the clamp is removed from the femoral bypass assuring recirculation of medium-sized vessels, and in one case perfusion is done through the carotid artery and the fake blood is collected in a closed circuit through the femoral artery, assuring blood pressure and arterial recirculation, where the blood pressure as well as the heart beat rate can be established on demand.

This model allows for perfect training conditions for a number of surgeries using laparoscopy, arthroscopy, thoracoscopy as well as endoscopy, arterial puncture, implantation of central venous catheters, etc.

### Example 3. Preparing the cadaver with NFC tags

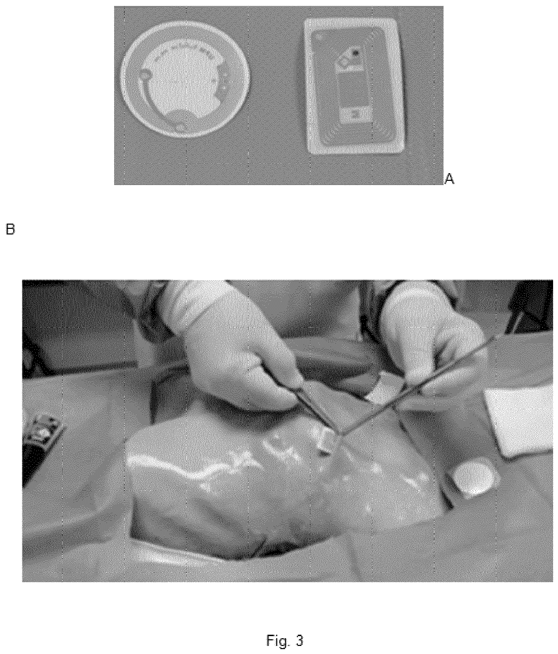

Programmable NFC tags equipped with an antenna and microchips capable of being activated by means of radio frequency and recognized by a sensor are used (Figure 3A). An NFC tag is a small passive card (battery-free) containing a small microchip attached to a small loop antenna. When the tag is scanned by an NFC reader, such as a mobile telephone and another reader, the tag is turned on and wirelessly transmits the retrieved information, such as a web address, text, an image, a graph, or command for the application.

Said tags are implanted in the subcutaneous cell tissue in different regions by means of small incisions sutured by means of adhesives making them virtually unrecognizable, a total of 22 being implanted in different regions (Figure 3B).

Then, and by means of the "SDK tag" system, and once it has been recognized, the tag is numbered, identified and programmed for the purpose of retrieving from a library sounds, graphs and images previously implemented in the computer.

The tags used can be RapidNFC, SonyTinsi, TecTiles, and the programs used can be NFC Tag SDK, Identive Smartcard Comander, Task Laucher.

Once the tag is located by means of a reader connected by means of USB port to the PC, it is implemented by means of software suitable for reproducing the sounds, plots or images of the human being in the computer.

The multiprogramming of NFC tags allows not only obtaining normal images, sounds or plots, but also images, sounds or plots of different pathologies. Furthermore, the software can generate texts in response to questions found in a number of medical records, so cadavers monitored in this manner not only become elements for the study of a normal or sick individual and for training for physical exams, but they also become elements for assessments such as OSCE (objective structured clinical assessment).

If the tag is multiprogrammed, by way of example, the tag located on the right sternal point will reproduce the auscultation sound of the pulmonary sigmoid valve, but if the key 1 is pushed simultaneously, the AP x-ray of the chest will be seen, or when 1 is pushed the lateral x-ray will be seen. If 2 is pushed, the CT scan will be seen, and if 3 is pushed, the NMR will be seen. If 4 is pushed, the anatomical section of the region can be seen. If the letter P is pushed beforehand, images or sounds of different pathologies will be seen in relation to a known index or by means of a random selection. The computer may ask for the diagnosis and indicate to the user in self-assessment mode if the diagnosis was correct, and in OSCE assessment mode, it will give a list of correct or failed responses and a grade for the evaluator calculating penalizations for the wrong answers.

If the cadaver deteriorates excessively over time, the low-cost tags can be recovered to be implanted again in a new cadaver before incineration or they can simply be implanted again in the same region from which they came.

It is possible to hear the different cardiac tones at different auscultation points, or to perform ECG pulmonary auscultation. Conventional x-ray images, as well as CT scan images and 3D reconstructions can be seen in other regions.

### Example 4. Examination of the cadaver

The results of the physical examination of the cadaver perfused with the fake blood are optimal. The elasticity of its tissues allows palpation of different bone features or of possible abdominal masses since the walls are depressible, correct observation of the oropharynx as well as correct rhinoscopy, otoscopy, colposcopy, and anoscopy and by means of a laryngoscope it is possible to observe the larynx and perform tracheal laryngeal intubation.

It is also possible to examine joint mobility, head and neck mobility, and as well as temporomandibular joint mobility, which allows the correct examination of the mouth and other parts.

The cadaver prepared with this technique allows displaying ECG images with virtually the same definition as in a live patient, and since it is a highly interactive technique, it is fundamental for the person conducting the examination to be able to observe the images upon moving the probe in real time, which allows not only obtaining ECG images, but also if the cadaver is connected to recirculation, dynamic images with Doppler effect can likewise be displayed, and it likewise allows performing echo-guided spinal taps, epidural punctures or subdural punctures or echo-guided nerve trunk infiltrations.

By means of the implanted tags, observation with conventional x-ray, CT, NMR imaging and anatomical sectioning techniques of all the regions of the body in normal mode or of different pathologies is possible (Figure 4).

Cardiopulmonary auscultation is possible and cardiac auscultation is also possible independently of the four conventional focal points in normal auscultation.

It is possible to practice venoclysis, to search for central lines and to practice thoracocentesis or laparocentesis.

Bronchoscopy, esophagogastroscopy, pyloroplasty, and transduodenal papillotomy, as well as colonoscopy and polypectomy, as well as cystoscopy and hysteroscopy, are among the endoscopic techniques that have been successfully practiced.

TMJ, scapula humerus joint, elbow, wrist (open carpal tunnel), hip, knee, and ankle arthroscopies have been successfully practiced.

Laparoscopy has been successfully practiced for performing surgical gastrectomy for morbid obesity, surgery on the esophageal hiatus, appendectomies, splenectomies, genioplasties, colostomies, prostatectomies, nephrectomies, hysterectomies, adnexsectomies, as well as reconstructive surgery of the pelvic floor.

Additionally, transnasal approaches to the skull base, ventriculographies, approaches to the cerebellopontine angle have been practiced, as well as septorhinoplasties, ethmoidectomies and approaches to the frontal and sphenoid maxillary sinuses.

The use of the cadavers according to the invention with vascular recirculation prevents having to sacrifice animals and offers greater possibilities for a larger number of people to learn these techniques.

The possibility of the cadaver of the invention being physically examined by students with the possibility of cardiorespiratory auscultation, palpation, exam by means of a real ultrasound and examining in real time with conventional x-ray, CT and NMR techniques in all regions, optimizes resources with a factor of reality which implies a change in attitude for students.

The use in teaching would entail clear economic savings with respect to the use of simulators of another type with clear advantages with respect to their features and ease in replacement.

The simulators of the invention can be used to perform practical assessments, where evaluators can readily program exams such as the objective structured clinical assessment (OSCE), and wherein the responses provided by students through the computer can be processed in real time with the subsequent time savings involved for teaching staff.

The cadavers of the invention have advantages with respect to other simulators in that it can be readily programmed by professors, depending on those aspects which, at a certain point of learning, are of greater interest to be highlighted in practice, and they can also be reprogrammed for other functions.

## Claims

1. A composition comprising a humectant, a first antiseptic, a fixative, a thickener, a dye, and water.

2. The composition according to claim 1, wherein the humectant is polypropyleneglycol or monopropyleneglycol, the antiseptic is 4-chloro-3-methylphenol, the fixative is formalin, the thickener is corn starch and/or the dye is E-123 carmine red dye.

3. The composition according to any of claims 1 or 2, additionally comprising a second antiseptic, a buffer agent, a compound capable of maintaining the color of tissues, a hygroscopic oxidizing agent, and/or a preservative agent.

4. The composition according to claim 3, wherein the second antiseptic and buffer agent is boric acid, the compound capable of maintaining the color of tissues is sodium sulfite, the hygroscopic oxidizing agent is ammonium nitrate and/or the preservative agent is potassium nitrate.

5. The composition according to claim 4, comprising boric acid, monoethyleneglycol or polyethyleneglycol, ammonium nitrate, potassium nitrate, 4 chloro-3 methylphenol, sodium sulfite, formalin, corn starch, E-123 dye and water.

6. The composition according to claim 5, comprising 0.1-0.3% (w/v) boric acid, 25-32% (v/v) monoethylenglico or polypropyleneglycol, 1.5-4% (w/v) ammonium nitrate; 2-5% (w/v) potassium nitrate, 0.7 M 4-chloro-3 methylphenol in 0.075-0.090% (v/v) ethyleneglycol or polypropyleneglycol, 0.15-0.25% (w/v) sodium sulfite, 2-4% (v/v) formalin, 0.1-0.3% (w/v) corn starch, and/or 0.2-0.4% (w/v) E-123 carmine red dye.

7. The composition according to claim 6, comprising 0.25% (w/v) boric acid, 28% (v/v) monoethyleneglycol or polypropyleneglycol, 3.2% (w/v) ammonium nitrate, 4.16% potassium nitrate, 0.7 M 4-chloro-3 methylphenol in 0.083% (v/v) ethyleneglycol or polypropyleneglycol, 0.1875% (w/v) sodium sulfite, 2.5% (v/v) formalin, 0.20% (w/v) corn starch, and/or 0.3% (w/v) E-123 carmine red dye.

8. A cadaver comprising a composition according to any of claims 1 to 7 in its vascular system.

9. A method for preserving a cadaver which comprises injecting into a cadaver a composition according to any of claims 1 to 7.

10. The method according to claim 9, wherein the cadaver has been previously perfused with Thiel solution.

11. The method according to claim 9 or 10, wherein the perfusion of the composition is carried out by arterial route.

12. The method according to claim 11, wherein the arterial route is by carotid artery route or femoral artery route.

13. The method according to claims 9 to 12, wherein the cadaver has been subjected to an arteriovenous by-pass.

14. Use of a cadaver defined according to claim 8 for medical training, learning, or assessment.

15. A cadaver comprising at least one tag configured for communicating by radio frequency and transmitting clinical information contained in the tag to a device.

16. The cadaver according to claim 15, wherein the tag is located subcutaneously.

17. The cadaver according to claim 15 or 16, wherein the tag is an RFID-type tag.

18. The cadaver according to claim 17, wherein the RFID-type tag is an NFC tag.

19. The cadaver according to any of claims 15 to 18, wherein the tag is a passive-type tag.

20. A method for obtaining a cadaver according to any of claims 15 to 19, which comprises implanting in the cadaver at least one tag configured for communicating by radio frequency and transmitting clinical information contained in said tag to a device.

21. The method according to claim 20, wherein said tag is implanted subcutaneously.

22. The method according to claim 20 or 21, wherein the tag is an RFID-type tag.

23. The method according to claim 22, wherein the RFID-type tag is an NFC tag.

24. The method according to any of claims 20 to 23, wherein the tag is a passive-type tag.

25. Use of a cadaver according to any of claims 15 to 19 for medical training, learning, or assessment.

26. The cadaver according to claim 8, additionally comprising at least one tag configured for communicating by radio frequency and transmitting clinical information contained in said tag to a device.

27. The cadaver according to claim 26, wherein said tag is located subcutaneously.

28. The cadaver according to claim 26 or 27, wherein the tag is an RFID-type tag.

29. The cadaver according to claim 28, wherein the RFID-type tag is an NFC tag.

30. The cadaver according to any of claims 26 to 29, wherein the tag is a passive-type tag.

31. Use of a cadaver according to any of claims 26 to 30 for medical training, learning, or assessment.

32. A method for obtaining a clinical simulator which comprises
(i) perfusing a cadaver with a composition according to any of claims 1 to 7, and
(ii) implanting at least one tag configured for communicating by radio frequency and transmitting clinical information contained in the tag to a device.

33. The method according to claim 32, wherein said tag is implanted subcutaneously.

34. The method according to any of claims 32 or 33, wherein the tag is an RFID-type tag.

35. The method according to claim 34, wherein the RFID-type tag is an NFC tag.

36. The method according to any of claims 30 to 35, wherein the tag is a passive-type tag.

37. A simulator comprising:
(I) a cadaver according to any of claims 15 to 19 or 26 to 30
(II) a reader configured for communicating by radio frequency with the tag and visually showing the clinical information of the tag, or a reader configured for communicating by radio frequency with the tag and transmitting the information so as to be shown visually in another device.

38. The simulator according to claim 37, which additionally comprises an interface configured for interacting with a user and selecting the information to be displayed.

39. The simulator according to any of claims 37 or 38, which additionally comprises a peristaltic pump.

40. The simulator comprising a cadaver according to claim 8 and a peristaltic pump.

41. Use of a simulator according to any of claims 37 to 40 for medical training, learning, or assessment.
